# EUROPÄISCHE PATENTSCHRIFT

(11) **EP 2 816 214 B1**
(45) Veröffentlichungstag und Bekanntmachung des Hinweises auf die Patenterteilung: **06.12.2017**
(21) Anmeldenummer: 14450016.2
(22) Anmeldetag: 23.04.2014
(51) Int. Cl.: F02F 7/00, F16C 9/02

(54) **Verbrennungskraftmaschine mit V-förmig angeordneten Zylinderbänken und Verfahren zu deren Montage**
Internal combustion engine with cylinder banks arranged in a V-configuration and method of assembling the same
Moteur à combustion interne doté de rangées de cylindres disposés en V et leur procédé de montage

(30) Priorität: 23.04.2013 AT 3382013
(43) Veröffentlichungstag der Anmeldung: 24.12.2014
(73) Patentinhaber: Steyr Motors Gmbh, 4407 Steyr (AT)
(72) Erfinder: Poxhofer, Markus, 3361 Aschbach (AT); Mayr, Florian, 4563 Micheldorf (AT); Aschaber, Michael, 4421 Aschach (AT)
(74) Vertreter: Kovac, Werner

(56) Entgegenhaltungen:
- EP-A1- 1 146 219
- DE-A1- 19 819 080
- DE-U- 6 812 460
- GB-A- 354 958
- US-A- 1 916 292

## Beschreibung

### Gegenstand

Die Erfindung betrifft eine Verbrennungskraftmaschine, deren Grundkörper aus einem Kurbelgehäuse und zwei zueinander V-förmig angeordneten Zylinderbänken besteht, die mittels Zuganker mit den Kurbelgehäuse verbunden sind, wobei in vertikalen Wänden des Kurbelgehäuses die obere Hälfte der Lageraugen für die Kurbelwellenlagerung ausgebildet sind und die Zuganker auch die untere Hälfte des Lagerauges mit dem Kurbelgehäuse verbinden, wobei die Trennebene zwischen dem Kurbelgehäuse und den unteren Hälften der Lageraugen in einer Normalebene zu den Winkelsymmetralen der Zylinderachsen der beiden Zylinderbänke liegt, wobei weiters das Kurbelgehäuse und die unteren Hälften der Lageraugen in der Teilungsebene zusammenwirkende Formschlusselemente haben, und wobei die Zuganker jeweils Bohrungen durchsetzen, die in den vertikalen Wänden parallel zu den Zylinderachsen durch die unteren Hälften des Lagerauges und durch das Kurbelgehäuse verlaufen und die Zuganker in Gewindebohrungen an der Unterseite darüber liegender Motorteile eingeschraubt sind, wobei weiters Formschlusselemente in der Teilungsebene beiderseits der Lageraugen in den Zwischenwänden des Kurbelgehäuse-Oberteils und des Kurbelgehäuse-Unterteils beziehungsweise des Kurbelgehäuses zusammenwirkende längs ausgerichtete Zähne gebildet sind, und wobei schließlich im Kurbelgehäuse in Längsrichtung eine Ölverteilleitung ist, von der in den vertikalen Wänden Ölzufuhrbohrungen zu den Lagern führen.

Die Motorteile können bei einer Verbrennungskraftmaschine in Monoblock-Bauweise die Zylinderbänke sein, andernfalls auf die Zylinderbänke aufgesetzte Zylinderköpfe. So können die Zuganker bei entsprechender Gestaltung der Lagerdeckel gleich lange sein. Die Formschlusselemente in der Teilungsebene sichern die unteren Hälften der Lageraugen gegen seitliches Verschieben.

Die Zuganker sind in Gewindebohrungen an der Unterseite darüber liegender Motorteile eingeschraubt. Diese Motorteile sind entweder die Zylinderköpfe, wobei die Zuganker die Zylinderbänke durchsetzen, oder es sind die Zylinderbänke. Letzteres im Falle die Zylinderbänke mit ihren Zylinderköpfen einstückig, in Monoblock - Bauweise, ausgeführt sind. Bei dieser Bauweise können die Zuganker kürzer sein.

### Stand der Technik

Aus der FR 776.475 ist eine Verbrennungskraftmaschine bekannt, deren zwei einzige Zylinder in V-Anordnung mittels Zugankern mit dem Kurbelgehäuse verbunden sind. Die Zuganker sind im Kurbelgehäuse in von den Stirnseiten eingeschobenen (zur Kurbelwellenachse parallelen) Längsbolzen verankert, was überhaupt nur bei zwei einzelnen Zylindern in V-Anordnung möglich ist, nicht aber bei Zylinderbänken mit mehreren Zylindern. Zur Befestigung der Lagerdeckel sind weitere Gewindebolzen von unten in die Längsbolzen geschraubt. Dieser alte Stand der Technik ist für moderne Hochleistungsmotoren unbrauchbar, weil kompliziert, umständlich, zu schwach und ungenau. Er zeigt aber den Konflikt zwischen der Verankerung der Zuganker und der Befestigung der Lagerdeckel, sowie das Bestreben, die Zuganker beiderseits eines Zylinders zur Vereinheitlichung ihres Dehnungsverhaltens gleich lang auszuführen.

In der DE 10 2004 044 780 A1 sind diese beiden Probleme gelöst. Allerdings wirken bei für alle Lager gleicher (horizontaler) Teilungsebene und Einbeziehung der Lagerdeckel in die Zuganker pulsierende Seitenkräfte auf die Lagerdeckel, denen die üblichen seitlichen vertikalen Passflächen bei Hochleistungs- insbesondere bei Dieselmotoren nicht standhalten. Verformungen und/oder Verschiebungen der Lagerdeckel in der Teilungsebene sind die Folge. Sie sind eine Gefahr für die Kurbelwellenlagerung. Weil die Kurbelwellenlager unter Druck mit Schmieröl versorgt werden, besteht dann auch die Gefahr unzureichender Schmierung der Lager. Aus Fertigungsgründen kommen zur jeweiligen Zylinderachse normale Teilungsebenen nicht in Frage.

Aus dem Deutschen Gebrauchsmuster 68 12 460 U und aus der DE 198 19 080 A1 ist es bekannt, in der Trennebene der Lager beiderseits eine Verzahnung anzubringen, um ein Verschieben der beiden Lagerhälften gegeneinander zu verhindern.

Die EP 1 146 219 A1 beschreibt einen Verbrennungsmotor mit Zylindern in enger V - Anordnung, in der sie einen gemeinsamen Zylinderblock bilden. Bei diesem sind, wie im weiter oben genannten Stand der Technik, die Formschlusselemente von der Kurbelwellenachse weit entfernte Schultern als vertikale Passflächen.

Aus dem belgischen Patent BE 469 859 ist ein V - Motor bekannt, dessen Formschlusselemente von der Kurbelwellenachse weit entfernte Schultern sind und dessen Zuganker die untere Hälfte der Lageraugen mit im Kurbelgehäuse quer angeordneten Stopfen verbinden.

### Problem / Lösung

Es ist daher Aufgabe der Erfindung, diese Nachteile zu vermeiden und eine Verbindung zwischen Lagerdeckel, Kurbelgehäuse und Zylinderbänken zu schaffen, die stabil und öldicht und platzsparend ist. Insbesondere sind die Bohrungen für die Zuganker platzsparend und mit geringer Schwächung der Trennwände unterzubringen.

Erfindungsgemäß schneiden die Bohrungen für die Zuganker die Ölzufuhrbohrungen und sitzt in den Bohrungen für die Zuganker in der Umgebung der Teilungsebene diese überbrückend jeweils eine Hülse. Dadurch sind die Bohrungen für die Zuganker platzsparend und mit geringer Schwächung der Trennwände unterzubringen. Weil in der Verschneidung der Bohrungen mit den Ölzufuhrbohrungen Öl in erstere übertritt und durch das Spitzenspiel der Zähne Öl in geringer Menge austreten könnte, wirken die Hülsen als Abdichtung.

In einer bevorzugten Ausführungsform besteht das Kurbelgehäuse aus einem Kurbelgehäuse-Oberteil und Kurbelgehäuse-Unterteil, welche längs der Teilungsebene formschlüssig mittels der Zuganker miteinander verbunden sind und hat auch das Kurbelgehäuse-Unterteil vertikale Wände, die die unteren Hälften der Lageraugen bilden, und haben das Kurbelgehäuse-Unterteil und das Kurbelgehäuse-Oberteil in der Teilungsebene zusammenwirkende Formschlusselemente, und sind die Zuganker gleich lange. Durch die horizontale Teilung des Kurbelgehäuses bildet das Kurbelgehäuse-Unterteil eine steife Einheit, die die einzelnen Lagerdeckel ersetzt.

Die Hülsen weisen mit Vorteil über ihre ganze Länge ein auf das Außengewinde der Zuganker passendes Innengewinde auf und sie liegen an den Wänden der Bohrungen dichtend an. Mit der entsprechenden Toleranz des Außendurchmessers werden sie gefertigt, die etwa einem strengen Schiebesitz entspricht.

Die Zuganker sind Dehnschrauben, die in einer Weiterbildung an der Stelle einen Bund aufweisen, die bei vollständig in die Zylinderbank eingeschraubtem Zuganker unter dem unteren Rand der Hülse zu liegen kommt. Damit ist die Hülse dauerhaft positioniert.

Die Erfindung betrifft auch ein Verfahren zum Zusammenbau einer erfindungsgemäßen Verbrennungskraftmaschine. Es ermöglicht es, die Hülsen in den parallel zu den Zylinderachsen ausgerichteten - also zur Symmetrieebene geneigten - Bohrungen zu montieren, ohne das vertikale Zusammenfügen von Kurbelgehäuse-Oberteil und Kurbelgehäuse-Unterteil zu beeinträchtigen. Es besteht im Wesentlichen darin, dass die Hülsen zuerst ganz in die Bohrungen im Unterteil gesteckt, dann die jeweiligen Zylinderbänke aufgesetzt, und dann die Hülsen aufwärts in die Bohrungen im Kurbelgehäuse-Oberteil im verschoben werden.

### Abbildungen

Im Folgenden wird die Erfindung anhand von Abbildungen eines Ausführungsbeispiels beschrieben und erläutert. Es stellen dar:
Fig. 1: eine erfindungsgemäße Verbrennungskraftmaschine, axonometrisch,
Fig. 2: eine Ansicht nach II in Fig. 1,
Fig. 3: eine Ansicht nach III in Fig. 1,
Fig. 4: Schnitt nach AA und BB in Fig. 2,
Fig. 5: Detail D in Fig. 1,
Fig. 6: Schritte a) und b) des erfindungsgemäßen Verfahrens,
Fig. 7: Schritt c) des erfindungsgemäßen Verfahrens,
Fig. 8: Schritt d) des erfindungsgemäßen Verfahrens,
Fig. 9: Schritt e), des erfindungsgemäßen Verfahrens,

### Beschreibung

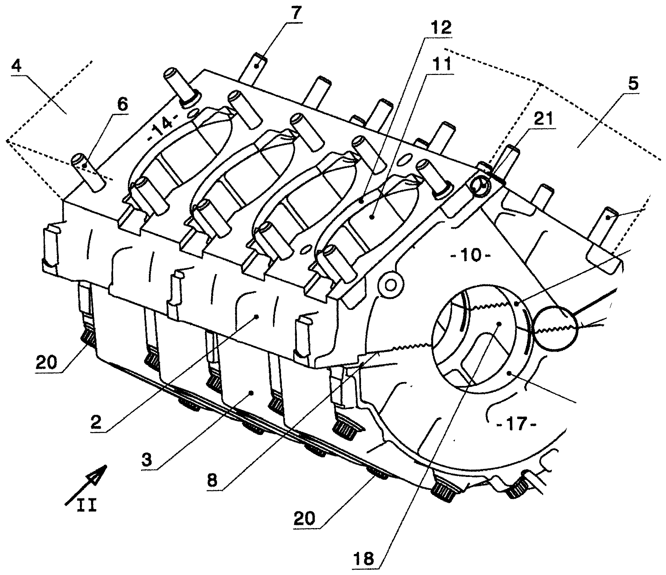

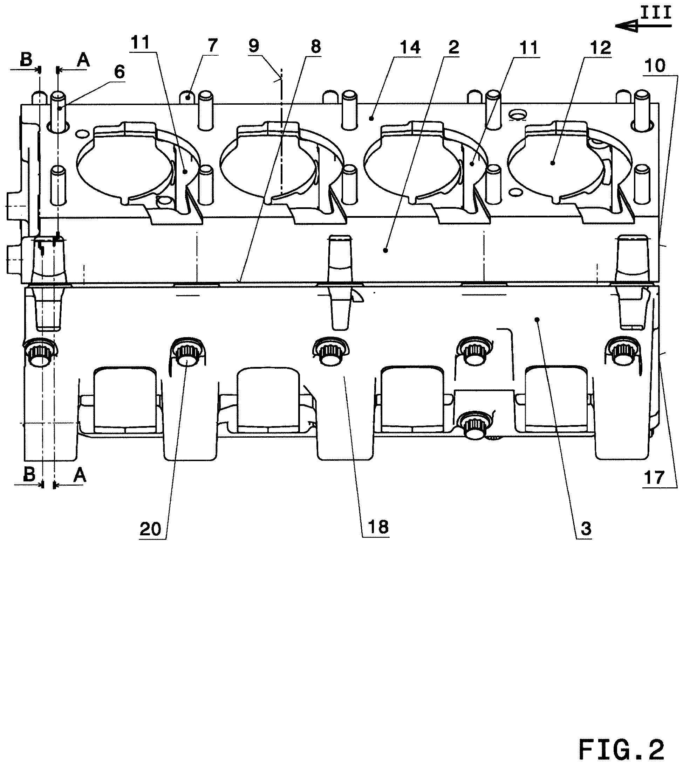

In den **Fig. 1** und **2** ist ein Kurbelgehäuse mit 1 bezeichnet. Es ist hier längs einer Teilungsebene 8 in ein Kurbelgehäuse-Oberteil 2 und ein Kurbelgehäuse-Unterteil 3 geteilt. Auf dem Kurbelgehäuse 1 sind in V-Anordnung eine linke (4) und eine rechte Zylinderbank 5 (strichliert angedeutet) mittels Zugankern 6,7 befestigt. Sie können auch die Zylinderbänke 4,5 durchsetzen und in die jeweiligen Zylinderköpfe eingeschraubt sein. Sie könnten auch die Zylinderbänke durchsetzen und in die Zylinderköpfe eingeschraubt sein.

Das Kurbelgehäuse-Oberteil 2 hat vorne und hinten eine Stirnwand 10 und dazwischen und zwischen den Zylinderöffnungen 12 vertikale Zwischenwände 11. Die Stirnwände 10 und die Zwischenwände 11 bilden, getrennt durch die Teilungsebene 8, jeweils die obere Hälfte 13 eines Lagerauges. Ganz oben im Kurbelgehäuse 1 beziehungsweise im Kurbelgehäuse-Oberteil 2 verläuft in Längsrichtung eine Ölverteilleitung 21. Beiderseits dieser endet das Kurbelgehäuse in zwei Aufsetzebenen 14 für die beiden Zylinderbänke 4,5. Die Normalen auf die beiden Aufsetzebenen 14 schließen miteinander den V-Winkel ein. Die von deren Winkelsymmetrale aufgespannte Ebene ist die Symmetrieebene.

Das Kurbelgehäuse-Unterteil 3 hat vorne und hinten eine Stirnwand 17 und hier auch Zwischenwände 18, in denen jeweils die untere Hälfte 19 eines Lagerauges gebildet ist. Anstelle der Zwischenwände können die jeweiligen unteren Hälften der Lageraugen auch einzelne Lagerdeckel (nicht dargestellt) sein, an denen das untere Ende der Zuganker 6,7 angreift. Die Zuganker 6,7 verlaufen jeweils zueinander windschief und leicht versetzt in den Zwischenwänden 11, 18 und in den Stirnwänden 10,17. Sie haben unten einen Kopf 20 und oben einen Gewindeteil 22.

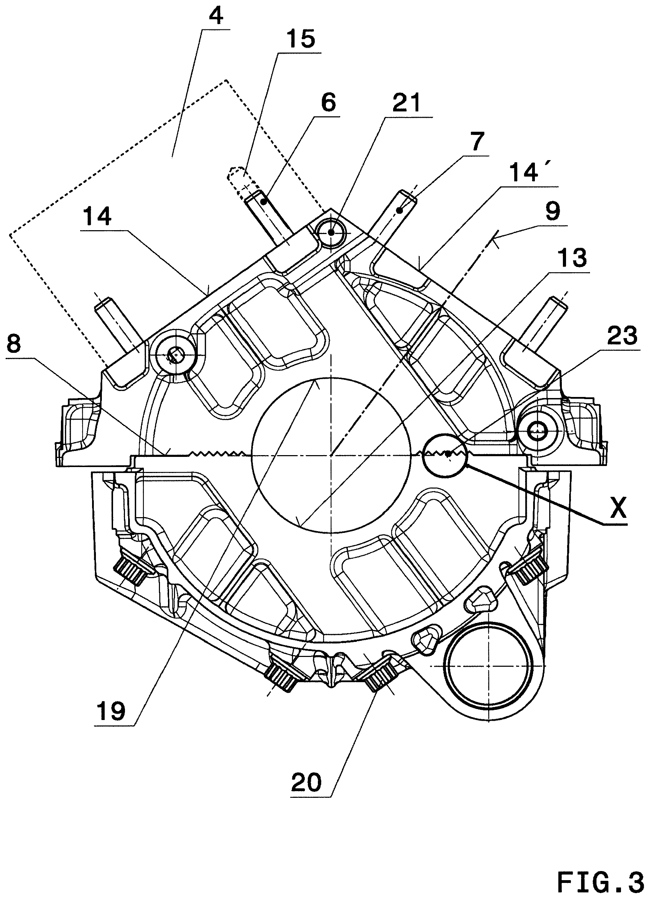

In **Fig. 3** ist der Verlauf der Zuganker 6,7 besser erkennbar. Die linke Zylinderbank 4 und eine ihrer Gewindebohrungen 15 sind wieder strichliert angedeutet. In der Teilungsebene 8 ist in den Stirnwänden 10,17 und in den Zwischenwänden 11,18 beiderseits der Lageraugen 13,19 eine Verzahnung 23 vorgesehen, die erfindungsgemäß die Horizontalkomponenten der durch die Zuganker 6,7 eingeleiteten pulsierenden Kräfte in unmittelbarer Nähe der Lageraugen aufnimmt.

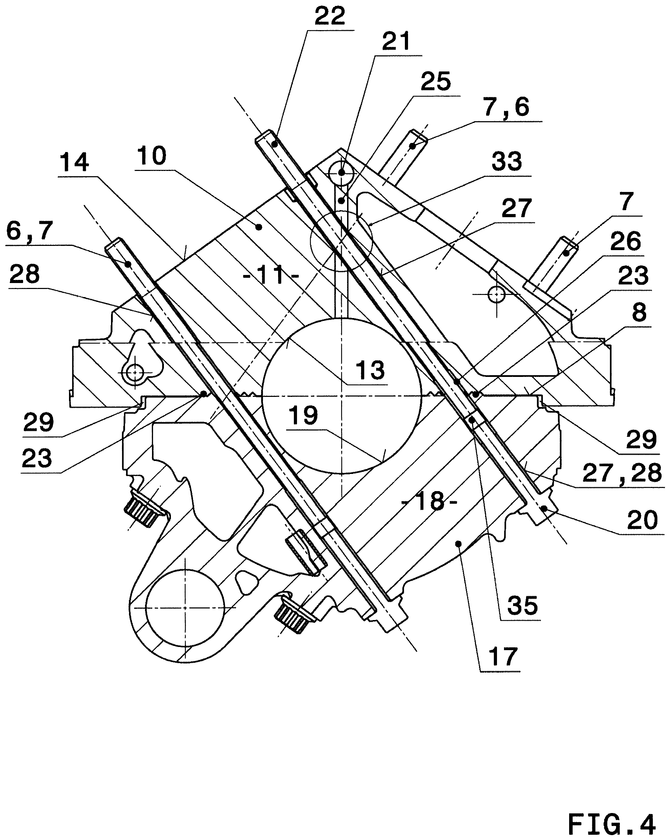

**Fig. 4** sind die Schnitte nach BB und AA in Fig. 2. Sie sind wegen der entgegengesetzten Blickrichtung der Schnitte BB und AA identisch. Der Schnitt ist durch die Zwischenwand 11 des Kurbelgehäuse-Oberteils 2 und die Zwischenwand 18 des Kurbelgehäuse-Unterteil 3 beziehungsweise eines (nicht dargestellten Lagerdeckels) geführt. Die beiden Teile (2,3) berühren einander entlang der Teilungsebene 8 und bilden gemeinsam das Lagerauge 13,19. Der Positionierung und Krafteinleitung dienen seitliche vertikale Passflächen 29 und eine Verzahnung 23 beiderseits des Lagerauges 13,19. Die Passflächen können bei ausreichender Zähnezahl der Verzahnung unter Umständen sogar wegfallen.

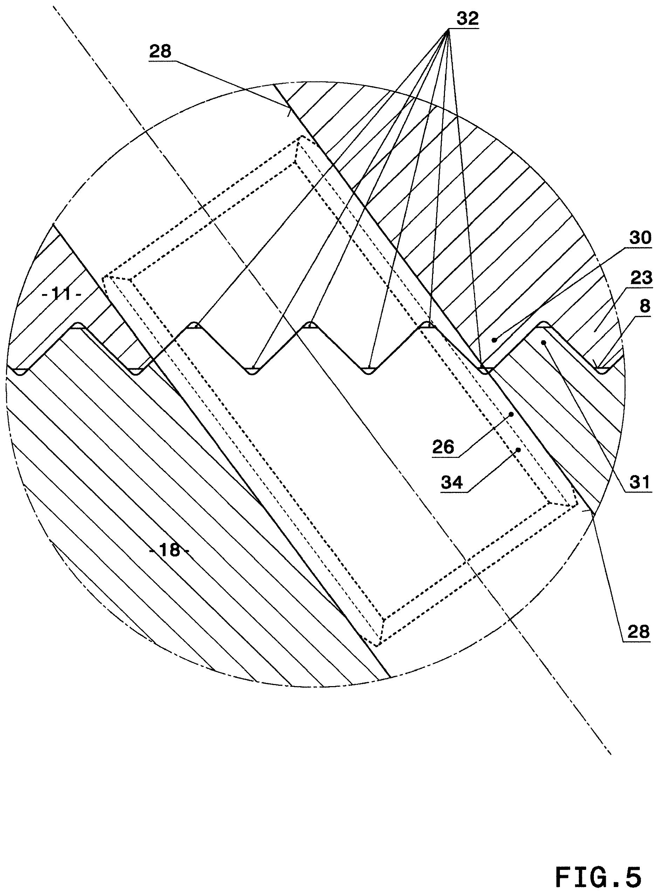

Bohrungen 27,28 zur Aufnahme der Zuganker 6,7 erstrecken sich durch die Zwischenwände 11,18 und durchstoßen die Teilungsebene 8 in der Verzahnung 23. Die Zylinder der Zylinderbänke 4,5 und auch die Bohrungen 27,28 sind in Längsrichtung geringfügig gegeneinander versetzt. Sie bilden mit der jeweiligen Ölzufuhrbohrung 25, die von der Ölverteilleitung 21 abwärts zu den Lageraugen 13,19 führen, eine Verschneidung 33. In dieser stehen die Bohrungen 27,28 mit der Ölzufuhrbohrung 25 in Fluidverbindung. In den Bohrungen 27,28 steckt im Bereich der Teilungsebene jeweils eine Hülse 26. Ihre Wirkung wird anhand der Fig. 5 erläutert.

**Fig. 5** zeigt die Umgebung der Verzahnung 23 in der Teilungsebene 8. Die Verzahnung besteht aus einer Anzahl längsgerichteter Zähne 30 im Oberteil 2 und entsprechender Zähne 31 im Unterteil 3. Bei der Bearbeitung entstehen zwischen den Spitzen der Zähne 30,31 und deren Zahngrund Freistellungen 32. Durch die Verschneidungen 33 gelangt Öl unter Druck in die Bohrungen 27,28. Die an den Bohrungen 27,28 anliegenden Hülsen 26 verhindern, dass Öl durch die Freistellungen 32 leckt. Die Hülsen 26 mit ihrem Innengewinde 34 sind in Fig. 5 strichliert angedeutet.

Im Folgenden wird das erfindungsgemäße Verfahren zum Zusammenbau der Verbrennungskraftmaschine beschrieben. Dabei geht es vor allem um das Einbringen der Hülse in die einmal in einer und einmal in der anderen Richtung geneigten Bohrungen 27,28 in der Weise, dass Oberteil 2 und Unterteil 3 in vertikaler Richtung (normal zur Teilungsebene 8, beziehungsweise in der Richtung der Winkelsymmetralen) zusammengefügt werden können.

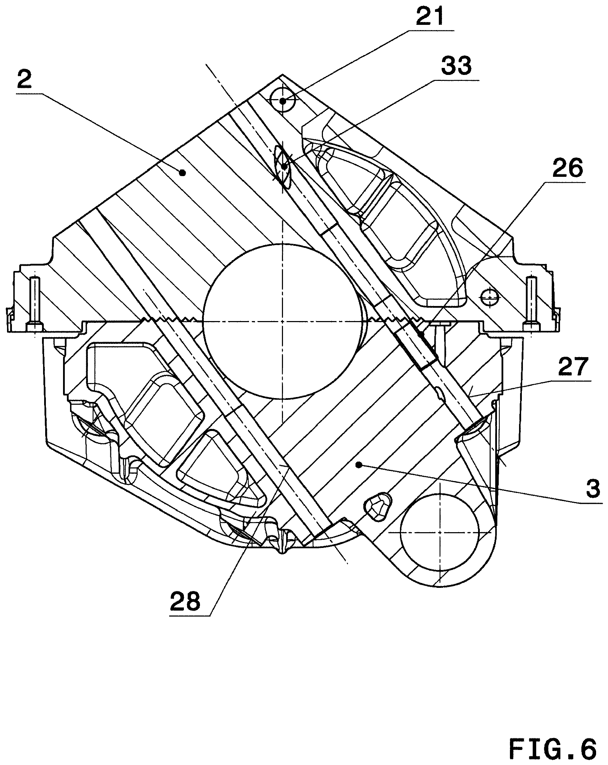

Zuerst werden die Hülsen 26 in die Bohrungen 27,28 im Kurbelgehäuse-Unterteil 3 (beziehungsweise in nicht dargestellte Lagerdeckel) eingeschoben.
Dann wird das Kurbelgehäuse-Oberteil 2 auf das Kurbelgehäuse-Unterteil 3 aufgesetzt, wobei die Verzahnungen 23 in der Teilungsebene 8 in Eingriff kommen. Das ist Stellung der **Fig. 6****.**

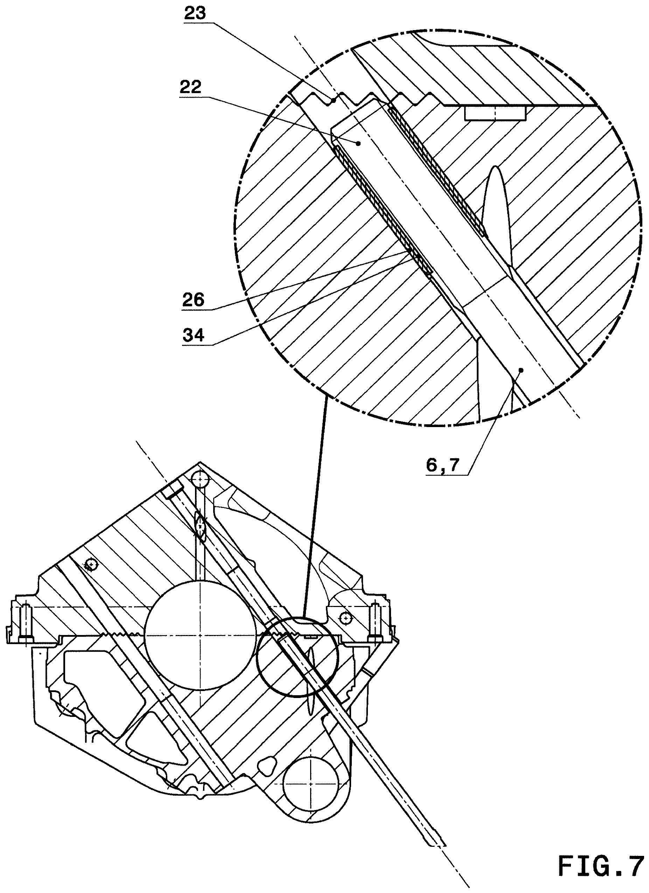

Sodann werden die Zuganker 6,7 von unten durch die Bohrungen 27,28 im Kurbelgehäuse-Unterteil eingeschoben und mit ihrem oberen Ende mit der Hülse leicht lösbar verbunden. Das könnte mittels eines geeigneten Klebers oder geeigneter Wahl der Passung geschehen. Wie in **Fig. 7** dargestellt, erfolgt es durch Einschrauben des Gewindeteils 22 am oberen Ende der Zuganker 6,7 in die mit einem Innengewinde 34 versehene jeweilige Hülse 26.

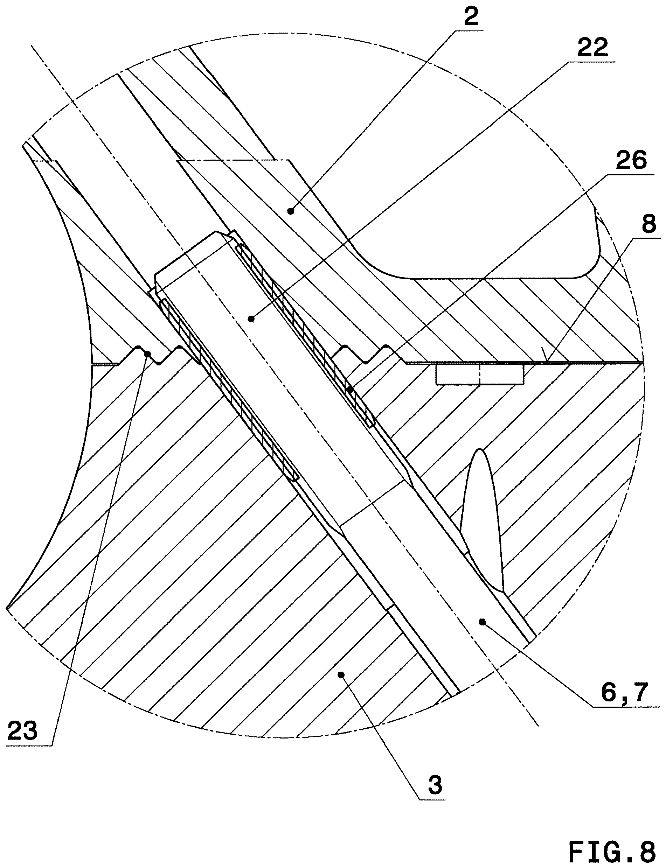

Nun können die Hülsen mittels der Zuganker 6,7 so weit aufwärts geschoben werden, dass sie die Verzahnung 33 in der Teilungsebene 8 überbrückend mit ihrer oberen Hälfte, also teilweise, im Kurbelgehäuse-Oberteil 2 stecken, also ihre Endlage erreicht haben, wie in **Fig. 8** zu sehen. In dieser Lage dichten sie die Bohrung gegenüber der Verzahnung (30,31) ab.

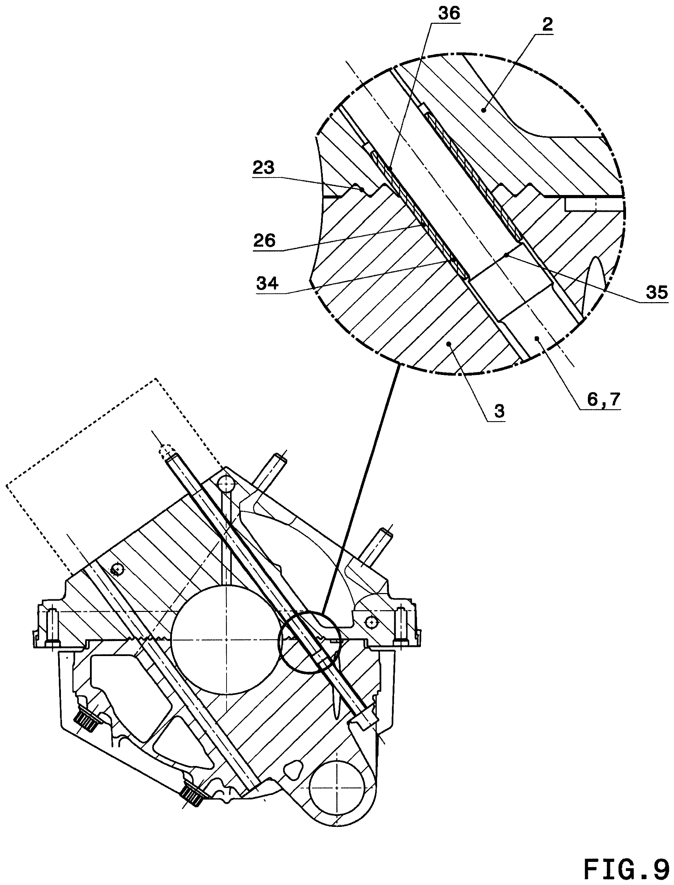

Als nächster Schritt werden die Zuganker 6,7 von der Hülse gelöst. Das kann mit einem leichten Hammerschlag erreicht werden, wenn Zuganker 6,7 und Hülse 26 nur verklebt oder eng gepasst sind. Wenn der Gewindeteil 22 der Zuganker 6,7 mit der jeweiligen Hülse 26 durch Einschrauben der Zuganker 6,7 verbunden wurde, werden die Zuganker einfach weiter verschraubt, bis ihr Gewindeteil 22 nach oben aus der Hülse 26 austritt. Die Gewindeteile 22 der Zuganker 6,7 sind ja nur an ihrem oberen Ende. Deshalb können die Zuganker 6,7 in ihrer Bohrung 27,28 weiter aufwärts verschoben werden, wie in **Fig. 9** zu sehen, bis sie die in **Fig. 4** abgebildete Endstellung erreicht haben. Dort ist auch ein Bund 35 zu erkennen, der die Position der Hülse 26 sichert.

Schließlich werden die Zylinderbänke 2,3 auf das Kurbelgehäuse 1 beziehungsweise das Kurbelgehäuse-Oberteil 2 aufgesetzt und durch weiteres Verdrehen der Zuganker 6,7 mit diesem, und gegebenenfalls mit dem Zylinderkopf verschraubt.

Die Erfindung ist nicht auf die dargestellte Ausführungsform beschränkt, sondern umfasst alle Varianten, Modifikationen und Kombinationen der einzelnen Merkmale, soferne diese in den Rahmen der anschließenden Ansprüche fallen. Insbesondere ist sie nicht auf Dieselmotoren beschränkt.

## Patentansprüche

1. Verbrennungskraftmaschine, deren Grundkörper aus einem Kurbelgehäuse (1) und zwei zueinander V-förmig angeordneten Zylinderbänken (4,5) besteht, die mittels Zugankern (6,7) mit den Kurbelgehäuse (1) verbunden sind, wobei in vertikalen Wänden (10,11) des Kurbelgehäuses die obere Hälfte (13) der Lageraugen für die Kurbelwellenlagerung ausgebildet sind und die Zuganker (6,7) auch die untere Hälfte (19) des Lagerauges mit dem Kurbelgehäuse (1) verbinden, wobei eine Teilungsebene (8) zwischen dem Kurbelgehäuse (1; 2) und den unteren Hälften (19) der Lageraugen in einer Normalebene zu den Winkelsymmetralen der Zylinderachsen (9) der beiden Zylinderbänke (4,5) liegt, wobei weiters das Kurbelgehäuse (1) und die unteren Hälften (19) der Lageraugen in der Teilungsebene (8) zusammenwirkende Formschlusselemente (23) haben, und wobei die Zuganker (6,7) jeweils Bohrungen (27,28) durchsetzen, die in den vertikalen Wänden (10,11) parallel zu den Zylinderachsen (9) durch die unteren Hälften (19) des Lagerauges und durch das Kurbelgehäuse (1;2) verlaufen und die Zuganker (6,7) in Gewindebohrungen (15) an der Unterseite darüber liegender Motorteile (4,5) eingeschraubt sind, wobei als Formschlusselemente (23) in der Teilungsebene beiderseits der Lageraugen (13,19) in den Zwischenwänden (11,18) des Kurbelgehäuse-Oberteils (2) und des Kurbelgehäuse-Unterteils (3) beziehungsweise des Kurbelgehäuses (1) zusammenwirkende längs ausgerichtete Zähne (30,31) gebildet sind, und wobei im Kurbelgehäuse in Längsrichtung eine Ölverteilleitung (21) und in den vertikalen Wänden (10,11, 17,18) Ölzufuhrbohrungen (25) zu den Lagern führen, **dadurch gekennzeichnet dass** die Bohrungen (27,28) für die Zuganker (6,7) die Ölzufuhrbohrungen (25) schneiden und dass in den Bohrungen (27,28) für die Zuganker (6,7) die Teilungsebene (8) überbrückend jeweils eine Hülse (26) sitzt.

2. Verbrennungskraftmaschine nach Anspruch 1, **dadurch gekennzeichnet, dass**
a) das Kurbelgehäuse (1) aus einem Oberteil (2) und einem Unterteil (3) besteht, welche längs der Teilungsebene (8) formschlüssig mittels der Zuganker (6,7) miteinander verbunden sind und dass die unteren Hälften (19) der Lageraugen im Kurbelgehäuse-Unterteil (3) ausgebildet sind,
b) das Kurbelgehäuse-Unterteil (3) und das Kurbelgehäuse-Oberteil (2) in der Teilungsebene (8) zusammenwirkende Formschlusselemente (23) haben, und dass die Zuganker (6,7) gleich lang sind.

3. Verbrennungskraftmaschine nach Anspruch 1, wobei die Zuganker (6,7) an ihrem unteren Ende einen Kopf (20) und an ihrem oberen Ende einen Gewindeteil (22) zum Einschrauben in die Zylinderbänke (4,5) haben, **dadurch gekennzeichnet, dass** die Hülsen (26) über ihre ganze Länge ein auf den Gewindeteil (22) der Zuganker (6,7) passendes Innengewinde (34) aufweisen und ihr (26) Außendurchmesser gleich dem Innendurchmesser der Bohrungen (27,28) ist.

4. Verbrennungskraftmaschine nach Anspruch 1, wobei die Zuganker (6,7) Dehnschrauben sind, **dadurch gekennzeichnet, dass** sie einen Bund (35) aufweisen, der bei vollständig in die Zylinderbänke eingeschraubten Zugankern (6,7) unter dem unteren Rand der jeweiligen Hülse (26) ist.

5. Verfahren zum Zusammenbau einer Verbrennungskraftmaschine nach einem der Ansprüche 1 bis 7, bestehend in folgenden Schritten:
a) Die Hülsen (26) werden in die Bohrungen (27,28) des Kurbelgehäuse-Unterteils (3) beziehungsweise in die untere Hälfte (19) der Lageraugen eingeschoben,
b) Das Kurbelgehäuse-Oberteil (2) wird auf das Kurbelgehäuse-Unterteil (3) beziehungsweise auf die unteren Hälften (19) des Lagerauges aufgesetzt, wobei die Formschlusselemente (23) in Eingriff kommen,
c) Die Zuganker (6,7) werden von unten durch die Bohrungen (27,28) des Kurbelgehäuse-Unterteils (3) beziehungsweise der unteren Hälften (19) des Lagerauges eingeschoben und mit ihren Gewindeteil (22) mit der jeweiligen Hülse (26) leicht lösbar verbunden,
d) Die Hülsen (26) werden durch Verschieben der Zuganker (6,7) so weit aufwärts verschoben, dass sie teilweise im Kurbelgehäuse-Oberteil (2) beziehungsweise dem Kurbelgehäuse (1) stecken,
e) Die Zuganker (6,7) werden von den Hülsen (26) gelöst und dann weiter aufwärts geschoben, bis ihr Gewindeteil (22) oben aus dem Kurbelgehäuse-Oberteil (2) beziehungsweise dem Kurbelgehäuse (1) herausragt,
f) Schließlich werden die Zylinderbänke (4,5) auf das Kurbelgehäuse-Oberteil (2) beziehungsweise das Kurbelgehäuse (1) aufgesetzt und die Zuganker (6,7) festgezogen.

6. Verfahren nach Anspruch 5, **dadurch gekennzeichnet, dass** in Schritt c) Die Zuganker mit ihren am oberen Ende angeordneten Gewindeteilen (22) in das Innengewinde (34) der jeweiligen Hülse (26) eingeschraubt werden, und dass in Schritt e) die Zuganker weiter verdreht werden, bis ihr Gewindeteil (22) nach oben aus der Hülse (26) austritt und dann weiter aufwärts geschoben, bis ihr Gewindeteil (22) oben aus dem Kurbelgehäuse-Oberteil (2) beziehungsweise dem Kurbelgehäuse (1) herausragt.

## Claims

1. Combustion engine essentially comprising a crankcase (1) and two cylinder banks (4,5) in a V-shaped configuration, which cylinder banks (4,5) are tied to the crankcase (1) by tension bolts (6,7), the upper half (13) of the bearing eyes for journalling the crankcase being provided in vertical walls (10,11) of the crankcase and the tension bolts (6,7) tying also the lower half (19) of the bearing eye to the crankcase (1), wherein a division plane (8) between the crankcase (1;2) and the lower halve (19) of the bearing eyes is situated in a plane normal to the bisectrix of the cylinder axis (9) of the two cylinder banks (4,5), wherein further the crankcase (1) and the lower halves (19) oft he bearing eyes have positively engaging elements (23) cooperating in the division plane (8), and wherein the tension bolts (6,7) are disposed in bores (27,28) situated parallel to the cylinder axis (9) in the vertical walls (10,11) of the lower halves (19) des of the bearing eye and through the crankcase (1;2) and the tension bolts (6,7) are screwed into tapholes (15) at the bottom of adjoining engine parts (4,5) on top oft he crankcase (1), wherein the positively engaging elements (23) in the division plane (8) are longitudinally extending cooperating teeth (30,31) on both sides of the bearing eyes (13,19) in the intermediate walls (11,18) of the upper piece (2) and the lower piece (3) of the crankase (1), and wherein a longitudinalle extending main oil duct (21) is provided in the crankcase and oil supply ducts (25) leading to the bearings are arranged in the vertikal walls (10,11, 17,18), **caracterized** in that the bores (27,28) for the tension bolts (6,7) intersect the oil ducts (25) and that in the bores (27,28) for the tension bolts (6,7) a tubelet (26) is arranged which bridges the division plane (8).

2. Combustion engine according to claim 1, **caracterized** in that
a) The crankcase (1) consists of an upper piece (2) and a lower piece (3), which are tied together in positive engagement along a division plane (8) by means of the tension bolts (6,7) and that the lower halves (19) of the bearing are located in the lower piece (3) of the crankcase,
b) the lower piece (3) and the upper piece (2) of the crankcase comprise in the division plane (8) cooperating means (23) of positive engagement, and that the tension bolts are of identical length (6,7).

3. Combustion engine according to claim 1, wherein the tension bolts (6,7) have a bolthead (20) at their lower end and a threaded section (22) at their upper end for being screwd into the cylinder banks (4,5), **caracterized** in that the tubelets (26) have an inner screw thread (34) over their whole length for cooperating with the threaded section (22) of the tension bolts (6,7) and in that their (26) outer diameter equals the inner diameter of the bores (27,28).

4. Combustion engine according to claim 1, wherein the tension bolts (6,7) are necked down bolts, **caracterized** in that they have a collar (35) situated under the lower edge of the tubelets (26) when the tension bolts (6,7) are entirely screwed into the cylinder banks (4,5).

5. Method of assembling a combustion engine according to any oft he claims 1 to 7, comprising the following steps:
a) The tubelets (26) are inserted into the bores (27,28) of the lower piece (3) of the crankcase or the lower half (19) of the bearing eye, as the case may be,
b) The crankcase upper piece (2) is placed on top of the crankcase lower piece (3) or the lower half (19) of the bearing eye, as the case may be, whereby the positively engaging parts (23) get engaged,
c) The tension bolts (6,7) are introduced from below through the bores (27,28) of the crankcase lower piece (3) or the lower halves (19) of the bearing eyes, as the case may be, and their threaded section (22) is disengageably linked to the repective tubelet (26),
d) The tubelets (26) are shifted in an upward direction by shifting the tension bolts (6,7) until part of them sticks in the crankcase the upper piece (2) or the crankcase (1), as the case may be,
e) The tension bolts (6,7) are released from the tubelets (26) and shifted further upwards until their threaded section (22) protrudes from from the crankcase upper piece (2), or the crankcase (1), as the case may be,
f) Finally, the cylinder banks (4,5) are placed on top of the crankcase upper piece (2) or the crankcase (1), as the case may be, and the tension bolts (6,7) are tightened.

6. Method according to claim 5, **caracterized** in that in step c) the threaded sections (22) at the top end of the tension bolts (6,7) are screwed into the inner screw thread (34) of the corresponding tubelet (26), and that in step e) the tension bolts (6,7) are further rotated until their threaded section (22) exits the tubelet (26) in an upward direction and are shifted upwards further until their threaded sections (22) protrude from the crankcase upper piece (2) or the crankcase (1), as the case may be.

## Revendications

1. Machine à combustion dont le corps de base comporte un carter de vilbrequin (1) et de deux bancs de cylindre (4,5) groupés en V reliés au carter de vilebrequin (1) moyennant des ancres tirants (6,7); la partie supérieure (13) des oeillets de palier du vilbréquin étant formée dans des parois verticales (10,11) du carter (1) et les ancres tirants (6,7) reliant aussi la partie inférieure (19) des oeillets de palier au carter (1); un plan de séparation (8) entre le carter (1; 2) et la partie inférieure (19) des oeillets étant situé dans un plan normal à la byssectrice des axes des cylindres (9) des deux bancs de cylindre (4,5);
en outre, le carter (1) et les parties inférieures (19) des oeillets de palier sont pourvus d'éléments d'engagement positif (23) coopérant dans le plan de séparation (8); les ancres tirants (6,7) chacun traversant un alésage (27,28) s'étendant dans les parois verticales (10,11) parallèle aux axes (9) de cylindre à travers les parties inférieures (19) des oeillets de palier et dans le carter (1;2), les ancres tirants (6,7) étant vissés dans des alésages taraudés (15); des dents (30,31) longitudineaux coopérants servant comme éléments d'engagement positif (23) étant situées dans le plan de séparation des deux parties des oeillets de palier (13,19) dans les parois intermédiaires (11,18) de la partie supérieure (2) du carter et de la partie inférieure (3) du carter oubien, selon le cas, du carter (1); un conduit d'huile principal (21) longitudinal dans le carter et des conduits d'amenée (25) dans les parois verticales (10,11, 17,18) amenent l'huile vers les paliers, **caractérisée en ce que** les alésages (27,28) recevant les ancres tirants (6,7) intersectent les conduits (25) et **en ce que** une douille (26) est placée dans les alésages (27,28) recevant les ancres tirants (6,7), la douille (26) traversant le plan de séparation (8).

2. Machine à combustion selon la revendication 1, **caractérisée en ce que**:
a) Le carter (1) comprend une partie supérieure (2) et une partie inférieure (3) reliées entre eux positivement selon un plan de séparation (8) par des ancres tirants (6,7) et les parties inférieures (19) de l'oeillet de palier sont réalisées dans la partie inférieure (3) du carter,
b) La partie inférieure (3) et la partie supérieure (2) du carter sont pourvues des éléments à engagement positif (23) coopérant dans le plan de séparation (8), et les ancres tirants (6,7) étant de longueur identique.

3. Machine à combustion selon la revendication 1, les ancres (6,7) comportant une tête de boulon (20) sur leur extrèmité inférieure et une section taraudée (22) sur leur exrèmité supérieure destinée à être vissé dans les bancs de cylindre (4,5), **caractérisée en ce que** les douilles (26) sont taraudées intérieurement (34) sur leur longueur entière afin de coopérer avec la section taraudée (23) des ancres tirants (6,7), et **en ce que** leur (26) diamêtre extérieur est égal au diamêtre intérieur des alésages (27,28).

4. Machine à combustion selon la revendication 1, les ancres tirants (6,7) étant des vis à tige allégée, **caractérisée en ce qu'**ils comporten un épaulement (35) lequel est situé sous le bord inférieur de la douille respective (26), lorsque les ancres tirants (6,7) sont complètement vissés dans les bancs de cylindre (4,5).

5. Procédé d'assemblage d'une machine à combustion selon une des revendications 1 à 7, comprenant les pas suivants:
a) Les douilles (26) sont enfilées dans les alésages (27,28) de la partie inférieure (3) du carter ou, selon le cas, dans la partie inférieure de l'oeillet de palier,
b) La partie supérieure (2) du carter est placé d'en haut sur la partie inférieure (3) du carter, ou, selon le cas, la partie inférieure (19) de l'oeillet de palier, si faisant les éléments d'engagement positif (23) viennent s'engager,
c) Les ancres tirants (6,7) sont introduits par dessous dans les alésages (27,28) de la partie inférieure (3) du carter ou, selon le cas, dans les parties inférieures des oeuillets de palier (19) et leurs (6,7) sections taraudées (22) sont engagés de façon détachable dans la douille (26) correspondante,
d) Les douilles (26) sont poussées vers le haut par translation des ancres tirants (6,7) jus'qu à ce qu'ils penètrent partiellement dans la partie supérieure (2) du carter ou, selon le cas, dans le carter (1),
e) Les ancres tirants (6,7) sont détachés des douilles (26) et translatés plus loin vers le haut, jus'qu à ce que leur section taraudée (22) saillisse de la partie supérieure (2) du carter, ou, selon le cas, du carter (1),
f) Enfin, les bancs de cylindre (4,5) sont placés sur la partie supérieure (2) du carter ou, selon la cas, le carter (1) et les ancres tirants (6,7) sont serrés.

6. Procédé selon la revendication 5, **caractérisé en ce que** dans le pas c), les section taraudées (22) à l'extèmité supériere des ancres tirants (6,7) sont vissées dans le taraudage intérieur (34) de la douille (26) correspondante, et **en ce que** dans le pas e) les ancres tirants (6,7) sont tournés jus'qu à ce que leur section taraudée (22) sorte de la douille (26) vers le haut et ils (6,7) sont ensuite poussés vers le haut plus loin, jus'qu à ce que leur section taraudée (22) sorte vers le haut de la partie supérieure (2) du carter ou, selon le cas, du carter (1).
